# EUROPÄISCHE PATENTSCHRIFT

(11) **EP 0 541 485 B1**
(45) Veröffentlichungstag und Bekanntmachung des Hinweises auf die Patenterteilung: **27.12.1996**
(21) Anmeldenummer: 92810819.0
(22) Anmeldetag: 23.10.1992
(51) Int. Cl.: B60P 3/14, B62D 33/04, B62D 29/00, B62D 27/02

(54) **Fahrzeug**
Vehicle
Véhicule

(30) Priorität: 06.11.1991 CH 3238/91
(43) Veröffentlichungstag der Anmeldung: 12.05.1993
(73) Patentinhaber: Alusuisse Technology & Management AG, 8212 Neuhausen am Rheinfall (CH)
(72) Erfinder: Röllin, Ulrich, CH-8048 Zürich (CH)

(56) Entgegenhaltungen:
- WO-A-85/05337
- DE-U- 8 914 164
- GB-A- 462 622
- GB-A- 1 148 752
- GB-A- 2 081 331
- GB-A- 2 169 375
- US-A- 3 633 970

## Beschreibung

Vorliegende Erfindung betrifft ein Fahrzeug und insbesondere Lastkraftwagen, welches ein Fahrerhaus und einen vom Fahrerhaus unabhängigen Kastenaufbau aufweist, wobei der Kastenaufbau in wenigstens einen Raum zur Aufnahme von Personen und der Mittel zum Personentransport und wenigstens einen Raum zur Aufnahme von Geräten und/oder Frachtgut und der Mittel zum Gerätetransport aufweist, sowie die Verwendung solcher Fahrzeuge mit diesem Kastenaufbau.

Fahrzeuge und dabei insbesondere Lastkraftwagen gliedern sich in der Regel in zwei Fahrzeugteile, nämlich einem Fahrerhaus und einem dahinter angeordnetem Aufbau zum Transport von Gütern oder Geräten. Zum Transport von z.B. einer Anzahl Kleingeräten ist es vorteilhaft, einen Kastenaufbau zur Verfügung zu haben, der die zu transportierenden Geräte aufnimmt und schützt.

Beispielsweise bei Fahrzeugen, die der Bewahrung und Rettung menschlichen Lebens und materieller Güter dienen, wie Fahrzeuge der Feuerwehr, der Katastrophenwehr, der Sanität usw., ist es sehr oft notwendig, eine die Kapazität des Fahrerhauses übersteigende Anzahl von Personen aufzunehmen. In der Praxis weisen die serienmässig angebotenen Fahrerhäuser zwei bis drei Plätze für den Personentransport auf. Sind solche Fahrzeuge auch für den Transport einer Personenzahl über diese Kapazität hinaus vorgesehen, werden Fahrzeuge gebaut, deren Fahrerhaus nach hinten verlängert wird und sich die nachfolgenden Aufbauten entsprechend verkürzen. Solche verlängerten Fahrerhäuser weisen eine Reihe von Nachteilen auf. Beispielsweise werden verlängerte Fahrerhäuser nicht oder nur in kleiner Serie gebaut, was mit wesentlichen höheren Anschaffungskosten für das Fahrzeug verbunden ist. Üblicherweise sind die Fahrerhäuser, insbesondere bei Unterfluranordnung vom Getriebe oder von Motor und Getriebe, sowie weiterer Aggregate, anhebbar, wie z.B. kippbar, ausgebildet. Dies ermöglicht die Wartung und Reparaturen an den Aggregaten unter dem Fahrerhaus auf einfache Weise. Durch die Grösse eines verlängerten Fahrerhauses kann dieses nicht mehr anheb- und insbesondere kippbar gestaltet werden. Es werden dann die Konstruktion weiter verteuernde Umbauten notwendig, um geeigneten Zugang zu den Aggregaten zu schaffen.

Aus dem Buch Oswahl/Gihl, Kraftfahrzeuge der Feuerwehr und des Sanitätsdienstes, Motorbuch Verlag Stuttgart, 1977, Seiten 256-258, sind verschiedene Löschfahrzeuge und Gerätekraftwagen zu erkennen, die unabhängig von der Fahrerkabine einen Kastenaufbau aufweisen, der jeweils im frontseitigen Bereich des Kastenaufbaues eine Zusteigemöglichkeit aus Trittstufe und einer mit einem Fenster versehenen Türe zeigen, entsprechend dem Oberbegriff von Anspruch 1.

Aufgabe vorliegender Erfindung ist es, die genannten Nachteile zu vermeiden und ein Fahrzeug mit einem Fahrerhaus und einem Kastenaufbau zur Verfügung zu stellen, das es ermöglicht, unter Verwendung eines an sich normalgrossen serienmässigen Fahrerhauses eine über dessen Platzverhältnissen liegenden Zahl von Personen und weitere Güter oder Geräte zu transportieren und darüber hinaus soll der Mannschaft ermöglicht werden bei seitlichen Behinderungen das Fahrzeug trotzdem zu verlassen.

Erfindungsgemäss wird die Aufgabe dadurch gelöst, dass der Raum zur Aufnahme von Personen und der Mittel zum Personentransport am rückwärtigen Ende des Kastenaufbaues angeordnet ist und am rückwärtigen Ende des Kastenaufbaues wenigstens eine Türe an der Rückwand angeordnet ist.

Der Kastenaufbau weist -- am Fahrzeug von vorn nach hinten gesehen -- einen Raum zur Aufnahme von Geräten und einen Raum zur Aufnahme von Personen auf.

Als Mittel zur Personentransport werden die Innenausstattungen, wie Sitze, Bänke, Tische und die sicherheitsrelevanten Merkmale, wie Sicherheitsgurte, Schutzpolster und dergleichen verstanden. Als Mittel zum Gerätetransport können Gestelle, Fächer, Führungen, Senk- und Hebevorrichtungen, Lagerbehälter und dergleichen umfasst sein.

In einer zweckmässigen Ausführungsform kann der Kastenaufbau eine begehbare Innenverbindung zwischen dem Raum zur Aufnahme der Personen und dem Raum zur Aufnahme der Geräte und/oder des Frachtgutes aufweisen.

Als begehbare Innenverbindung kann z.B. ein offener Durchgang, eine Türe oder eine Schleuse vorgesehen sein.

In weiterer zweckmässigen Ausführungsform kann innerhalb des Kastenaufbaus der Raum zur Aufnahme der Geräte einen begehbaren Innengang aufweisen. Der Innengang kann mittig, in Längsrichtung des Kastenaufbaus verlaufend angeordnet sein, wobei z.B. beidseitig des Innenganges Vorrichtungen zur Aufnahme von Geräten und Gütern vorgesehen werden können.

Der Innengang kann kann auch links- und/oder rechtsseitig innerhalb des Kastenaufbaus angeordnet werden.

In bevorzugter Ausführungsform stehen die begehbare Innenverbindung und der begehbare Innengang in gegenseitiger Verbindung. D.h. Vom Raum zur Aufnahme von Personen oder vom Mannschaftsraum ermöglicht die begehbare Innenverbindung den Durchtritt zum Raum zur Aufnahme der Geräte oder Geräteraum, wobei an den Durchgang sich der begehbare Innengang anschliesst. Der Durchgang kann durch eine Schiebe-, Falt- oder Flügeltüre etc. oder durch eine Schleuse verschliessbar sein.

In der Praxis hat dies z.B. den Vorteil, dass die im Manschaftsraum befindlichen Personen, wie Feuerwehrleute, die im Geräteraum untergebrachten Kreislaufgeräte oder Atemschutzgeräte bereits während der Einsatzfahrt behändigen und anziehen können.

Der Kastenaufbau stellt zweckmässig eine bauliche Einheit dar. Der Kastenaufbau kann fest oder lösbar mit dem Rahmen des Lastkraftwagens verbunden sein.

Eine lösbare Verbindung des Kastenaufbaus vom Rahmen oder Untergestell des Lastkraftwagens ermöglicht mittels geeigneter Vorrichtungen, wie z.B. mittels eines Krans und am Kastenaufbau angebrachten Halterungen oder mittels einer intern oder extern angebrachten Hub-, Verschieb- und Absetzeinrichtung das Abnehmen resp. Aufsetzen des Kastenaufbaus vom resp. auf den Lastkraftwagen.

Die Kastenaufbauten können in Leichtbauweise aus einem Dach, einem Boden und Seitenwandelementen, welche letztere über Pfosten- oder Eckprofile gegenseitig, über Dachgurtprofile oder Obergurtprofile mit dem Dach und über Untergurtprofile mit dem Boden verbunden sind, ausgeführt werden.

Bevorzugt sind die Obergurtprofile und die Untergurtprofile, die über die gesamte Länge resp. Breite des Kastenaufbaus durchgehend sind.

In einer weiteren bevorzugten Ausführungsform weist der Kastenaufbau Obergurtprofile, Untergurtprofile und Eckprofile auf, wobei die Eckprofile den gleichen Profilquerschnitt aufweisen, wie die Obergurtprofile oder allenfalls wie die Untergurtprofile.

Insbesondere weist der Kastenaufbau Obergurtprofile und Untergurtprofile durchgehend gleichen Profilquerschnittes auf.

Im Bereich des Raumes zur Aufnahme der Geräte kann zwischen Ober- und Untergurtprofil eine Gerippestruktur und im Bereich des Raumes zur Aufnahme der Personen eine Wandstruktur angeordnet sein und ein Adaptersystem kann die Verbindung zwischen Gerippe- und Wandstruktur schaffen.

Die Seitenwandelemente des Kastenaufbaus gliedern sich in Wandstrukturen und Gerippestrukturen. Als Wandstrukturen werden die flächigen Bauelemente bezeichnet, die den Mannschaftsraum seitlich begrenzen und zwischen Ober-, Untergurtprofile und den Eckprofilen resp. Adapterprofilen angeordnet sind. Die Wandstrukturen können z.B. Seitenwände, enthaltend gegebenenfalls Fenster, Türen oder anderweitige Öffnungen, darstellen.

Als Gerippestrukturen werden die Profilanordnungen im Bereich des Geräteraumes verstanden. Das Gerippe aus Profilen dient u.a. auch zur Befestigung von festen und beweglichen Abdeckungen, wie Türen, Klappen, Schubladenelemente, Rolläden und dergleichen, der Öffnungen, die durch die Profile begrenzt werden.

Das Adaptersystem kann z.B. Profile umfassen, welche zur Aufnahme einer Wandstruktur einen L-förmigen Querschnitt resp. eine angeformte Fahne in der Profilgestaltung aufweisen. Das Ober- und das Untergurtprofil können jeweils mindestens eine angeformte Fahne aufweisen, der die Aussenfläche eines Seitenwandelementes, des Daches und/oder des Bodens anliegen. Die Seitenwandelemente, das Dach und/oder der Boden können von einem oder mehreren Profilstücken gehalten werden, welche einerseits dem Ober- bzw. Untergurtprofil über eine hinterschnittene Nut eingreifende und dort ein parallelogrammartiges Klemmstück als Mutter durchdringende Schraube festgelegt sind. Die Wandstrukturen können vom Profilteil L-förmigen Querschnitt aufgenommen und durch ein Adapterprofil, das derart an den Profilteil angelegt wird, dass sich ein im Querschnitt U-förmiger Profilteil ergibt, haltbar befestigt werden.

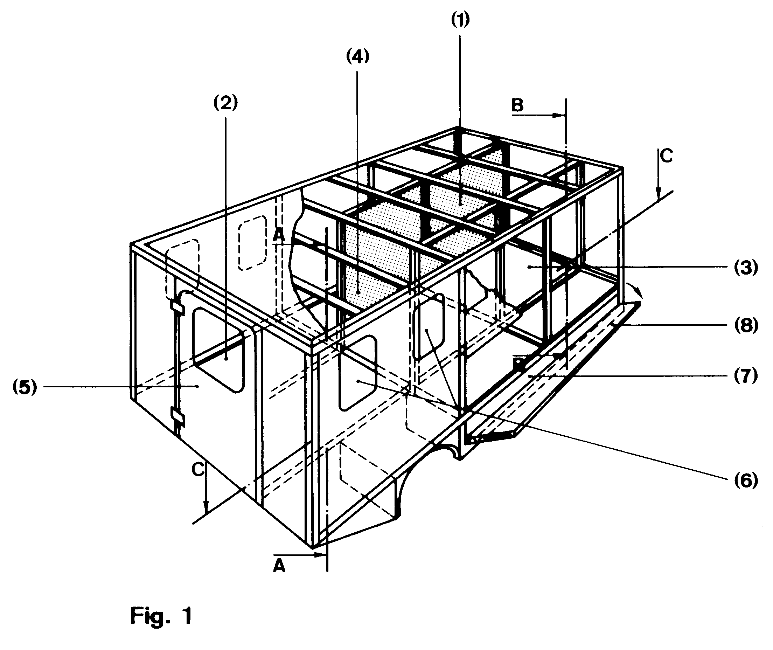

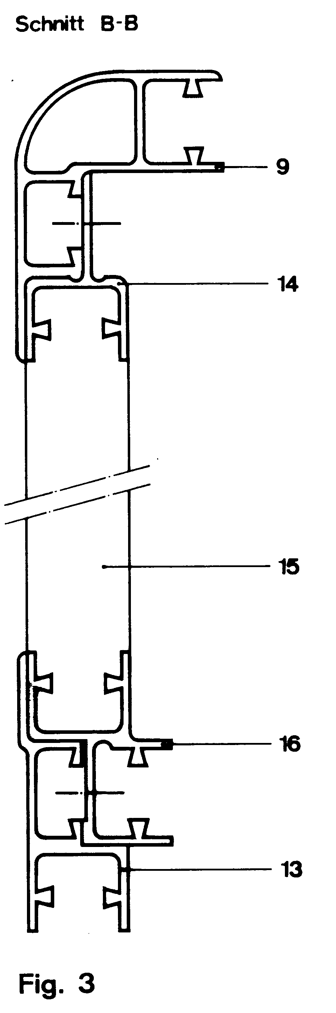

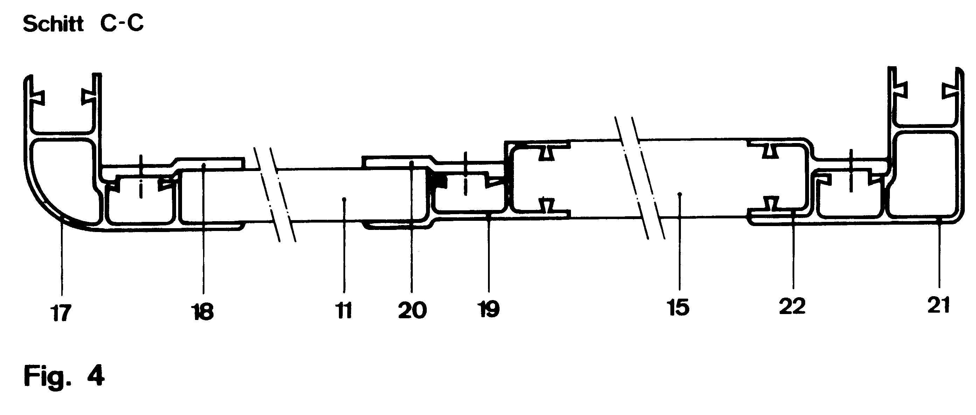

Die Figuren 1 bis 8 verdeutlichen beispielhaft vorliegende Erfindung.

Fig. 1 zeigt die perspektivische Ansicht eines erfindungsgemässen Kastenaufbaus. Im vorderen Teil, dem Fahrerhaus zugewandt, befindet sich ein Geräteraum (1), während im hinteren Teil des Kastenaufbaus ein Mannschaftsraum (2) angeordnet ist. Der Geräteraum (1) weist einen in Längsrichtung mittig angeordneten Innengang (3), und einen Durchgang (4) zwischen Innengang (3) und Mannschaftsraum (2) auf. Der Mannschaftsraum kann durch eine Türe (5) betreten werden. An den Seitenwänden des Kastenaufbaus im Bereich des Mannschaftsraumes sind beispielhaft Fenster (6) vorgesehen. Andere Anordnungen von Türen und Fenstern, wie z.B. seitliche Türen und stirnwandseitig angebrachte Fenster, sind ebenfalls möglich.

Die Geräte oder Güter können beispielsweise über den Innengang (3) in den Geräteraum gebracht und herausgenommen werden. Durch Öffnungen in den Seiten- und/oder Stirnwänden, die gegebenenfalls durch bewegliche Abdeckungen obengenannter Art verschlossen werden können, ist es ebenfalls möglich, Zugang zu den Geräten oder Gütern im Geräteraum zu schaffen.

Auch beispielhaft sind unterhalb des begehbaren Bodens Stauräume (7) , die durch eine Klappe (8) verschlossen werden können, angedeutet. Die Grösse des Stauraumes ist nur beispielhaft angedeutet und es können auch andere Unterteilungen und andere Anordnungen -- entsprechend dem verfügbaren Raum -- vorgesehen werden.

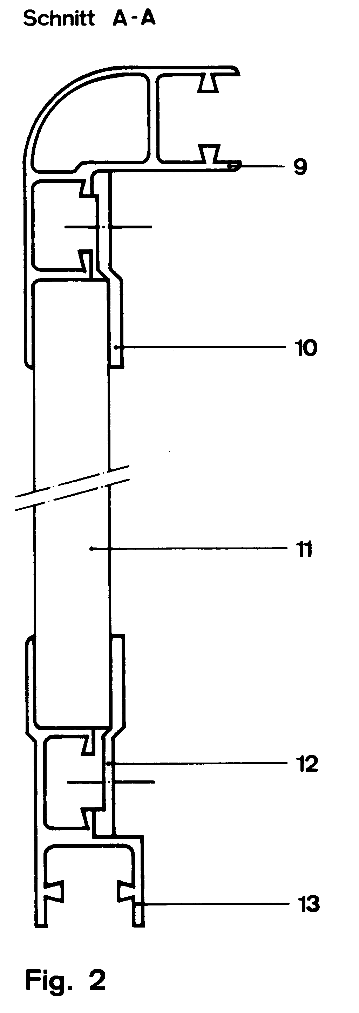

Fig. 2 zeigt einen Schnitt entlang der Linie A-A im Kastenaufbau gemäss Fig. 1. Ein durchgehendes Obergurtprofil (9) ist mittels eines Adapterprofils (10) mit einer Seitenwand (11) verbunden. Ein weiteres Adapterprofil (12) schafft eine schlüssige Verbindung zum durchgehenden Untergurtprofil. Die Obergurtprofile (9) und Untergurtprofile (13), wie auch die Adapterprofile (10,12) können aus verschiedenen Werkstoffen, wie z.B. Stahl, Messing, Aluminium, Aluminiumlegierungen oder Kunststoff sein. Aufgrund der leichten Verarbeitbarkeit des geringen spezifischen Gewichts, der Formbarkeit z.B. durch Strangpressen, der Festigkeit und der Korrosionsarmut ist Aluminium und seine Legierungen als Werkstoff bevorzugt.

Die Seitenwandelemente, wie die Seitenwände und Abdeckungen, können beispielsweise flächige Materialien, wie Bleche, Tafeln oder strukturelle Komponenten darstellen.

Die Seitenwandelemente sind z.B. aus Holz, aus Verbunden enthaltend Holz, Kunststoffe, Fasern, Gewebe und/oder Metalle oder die Seitenwände sind strukturelle Komponenten aus Verbundwerkstoffen, enthaltend Kunststoffe, Fasern, Gewebe und/oder Metalle. Bevorzugt werden Verbunde, enthaltend als Aussenschicht Aluminiumblech, eine allfällige Zwischenschicht kann z.B. aus Kunststoffen, gegebenenfalls in Form von Schaumstoffen, oder Metallen in Form von z.B. Streckmetallen oder Waben bestehen, und die Innenschicht kann ebenfalls Kunststoffe oder Metalle, insbesondere Aluminium in Blech- oder Plattenform enthalten.

Die Seitenwandelemente können auch z.B. flächenförmige Aluminiumprofile sein. Weiters können die Seitenwandelemente gegen Hitze und Kälte und/oder Schall isolierend gestaltet sein.

Fig. 3 zeigt einen Schnitt entlang der Linie B-B im Kastenaufbau gemäss Fig. 1.

Das durchgehende Obergurtprofil (9) ist mittels dem Adapterprofil (14) mit den Elementen eines Gerippes (15) verbunden. Das Gerippe (15) stützt sich auf das durchgehende Untergurtprofil (13) und ist mit dem Adapterprofil (16) am Untergurtprofil befestigt.

Fig. 4 zeigt einen Schnitt entlang der Linie C-C im Kastenaufbau gemäss Fig. 1.

An den Eckkanten weist der Kastenaufbau die Pfostenprofile (17 resp. 21) auf. Beispielhaft sind verschiedene mögliche Ausführungsformen von Pfostenprofilen (17) resp. (21) skizziert. In bevorzugter Ausführungsform weisen die Pfostenprofile den gleichen Querschnitt wie die Dachgurtprofile auf. Dies hat Vorteile bei der Herstellung, Lagerhaltung und Verarbeitung der Konstruktionselemente für den Kastenaufbau.

An das Pfostenprofil (17) schliesst, gehalten durch ein Adapterprofil (18) die Seitenwand (11) an. Die Seitenwand (11) erstreckt sich über den Mannschaftsraum des Kastenaufbaus. Zwischen dem Seitenwandteil des Mannschaftsraums und dem Seitenwandteil des Geräteraumes ist ein Ergänzungsprofil (19) angeordnet, das den Übergang zwischen den Konstruktionselementen der Seitenwand und des Gerippes (15) schafft. Die Seitenwand (11) wird mittels eines Adapterprofils (20) am Ergänzungsprofil (19) festgelegt. Das Gerippe (15), das sich seinerseits aus Profilstücken zusammensetzt, ist zwischen dem Ergänzungsprofil (19) und dem Pfostenprofil (21) angeordnet und durch das Adapterprofil (22) festgelegt. Zwischen den Pfostenprofilen, den Profilstücken und den Unter- und Obergurtprofilen im Bereich des Geräteraumes können Abdeckungen, insbesondere bewegliche Abdeckungen, wie vorstehend erwähnt, angebracht werden.

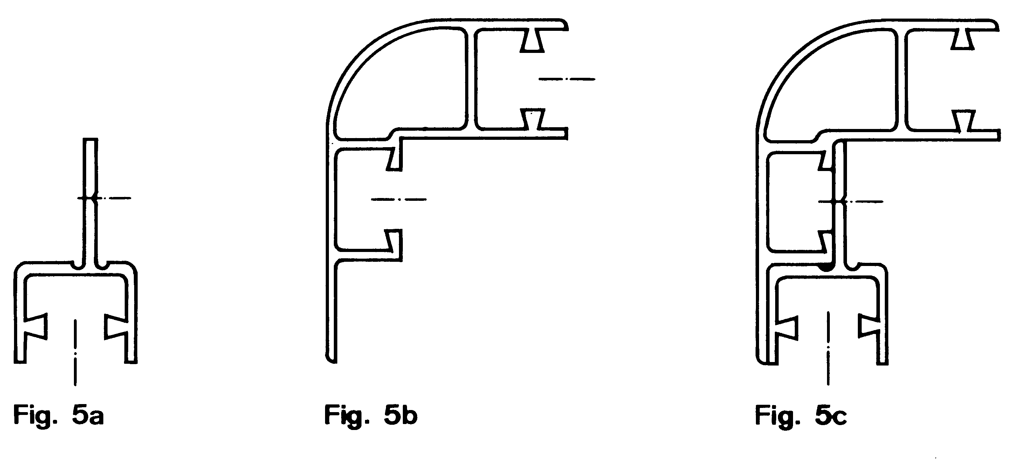

In Fig. 5a bis 5c sind beispielhaft mögliche Querschnitte Formen eines Adapterprofils (5a), eines Obergurtprofils (5b) und in Fig. 5c der Querschnitt durch das Obergurtprofil gemäss Fig. 5b angelegt an das Adapterprofil gemäss Fig. 5a, dargestellt.

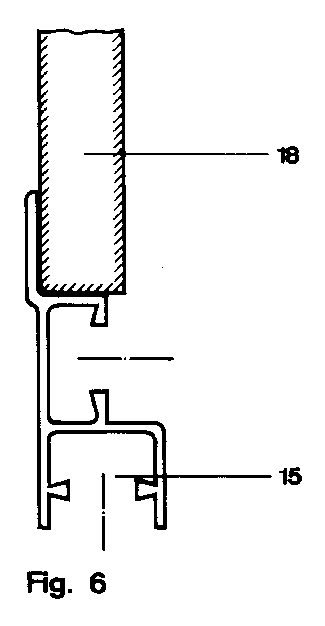

Fig. 6 zeigt den Schnitt durch ein Beispiel eines Ergänzungsprofils (19) oder Ergänzungspfostens. Einerseits an das Ergänzungsprofil (19) kann die Seitenwand (11) angelegt, anderseits können die Konstruktionselemente des Gerippes (15) angeordnet werden. Damit schafft das Ergänzungsprofil die Verbindung der Seitenwandelemente zwischen Mannschaftsraum und Geräteraum im Kastenaufbau.

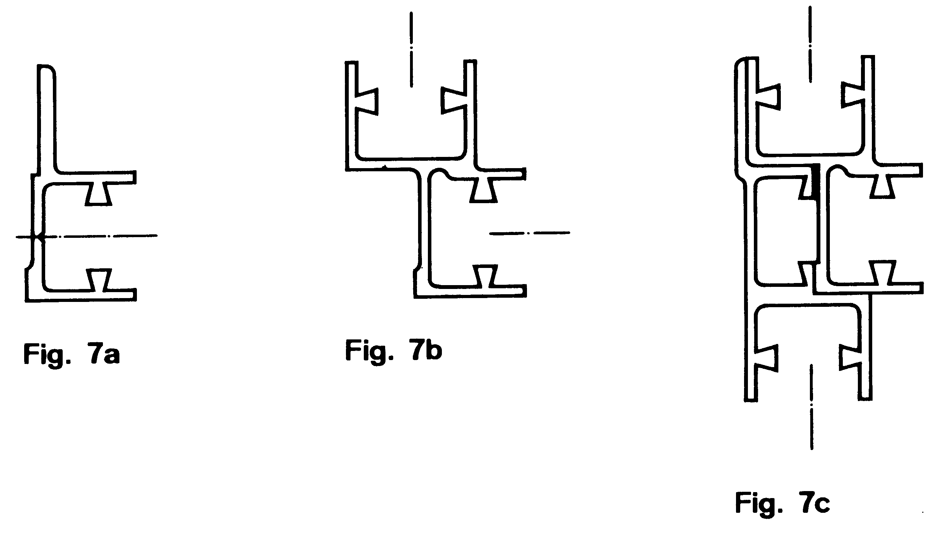

Fig. 7. stellt eine Untergurtprofilvariante dar, wobei in 7a ein Adapterprofil in 7b ein Untergurtprofil und in 7c die gefügten Elemente aus den Fig. 7a und 7b dargestellt sind.

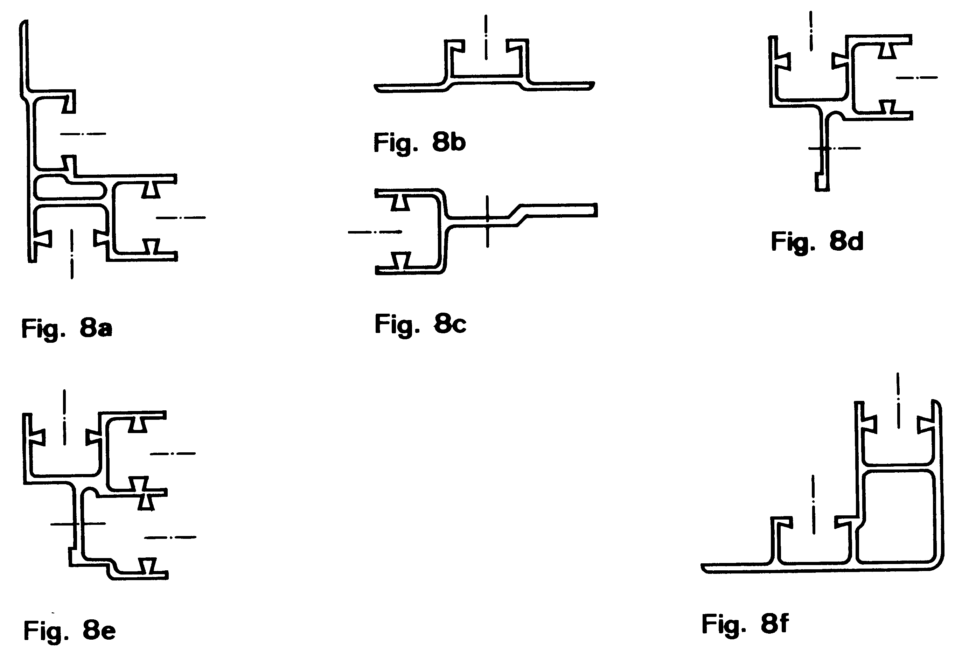

In Fig. 8 ist mit 8a eine beispielhafte Ausführungsform eines Untergurtprofils im Schnitt dargestellt.

In Fig. 8b ist ein Ergänzungsprofil (19) in einer möglichen Ausführungsform im Schnitt erkennbar.

In Fig. 8c, 8d und 8e sind beispielhaft die Profilquerschnitte von verschiedenen Adapterprofilen resp. Untergurtprofilen dargestellt. Ein Adapterprofil nach Fig. 8c findet beispielsweise im Bereich des Überganges einer Wandstruktur zur Gerippestruktur Anwendung. Ein Profil nach Fig. 8d stellt beispielhaft eine Ausführungsform für weniger belastete Bereiche eines Untergurtprofils dar, das z.B. mit Querträgern und einem Blechboden zu einer Bodenkonstruktion zusammengebaut werden kann. Ein Profil gemäss Fig. 8e stellt beispielhaft eine Ausführungsform für schwer belastete Bereiche eines Untergurtprofils dar. Das Untergurtprofil kann z.B. mit einem Holzboden, einem Blechboden, einem Blechprofil oder einem Boden aus Verbundmaterialien und Querträgern zu einer besonders stabilen Bodenkonstruktion zusammengebaut werden.

Der Anschlussbereich des Profils gemäss Figur 8e, der sich über zwei Nuten erstreckt, ermöglicht beispielsweise den Anschluss von Elementen, wie Böden oder Querträgern grösserer Materialstärke.

Fig. 8f bezieht sich auf den beispielhaften Querschnitt eines Pfostenprofils oder Obergurtprofils.

Die einzelnen Konstruktionselemente und deren gegenseitige Verbindungen können beispielsweise nach den in der DE-A-27 51 753, der EP-A-0 136 264 und der EP-B-0 185 678 beschriebenen Weisen ausgestaltet und ausgeführt werden.

Die EP-A-0 136 264 betrifft insbesondere ein Gerippe für einen Kastenaufbau z.B. für Strassenfahrzeuge mit über Eckverbindungsstücke miteinander verbundenen Profilstäben od. dgl., welche Längsnuten mit gegebenenfalls an beiden Seiten ihres Querschnittes vorgesehenen Hinterschneidungen aufweisen, in die ein Klemmstück eingesetzt ist.

Weitere Ausführungsformen für den Bau von Wagenkasten sind der EP-B-0 185 678 zu entnehmen und können sinngemäss für die Konstruktion von Kastenaufbauten nach vorliegender Erfindung angewendet werden.

Die EP-B-0 185 678 betrifft Wagenkastenaufbauten für Strassenfahrzeuge in Leichtbauweise aus einem Dach, einem Boden und Seitenwandelementen, welche letztere über Obergurtprofile mit dem Dach und über Untergurtprofile mit dem Boden verbunden sind. Das Obergurtprofil und das Untergurtprofil sind mit jeweils mindestens einer angeformten Fahne versehen, die der Aussenfläche des Seitenwandelements, des Daches und/oder des Bodens anliegen, wobei Fahne/n und Aussenfläche mittels eines Klebstoffes verbunden sind, und durch jeweils wenigstens ein am Ober- und Untergurtprofil angschraubtes Profilstück zu einer eine Stirnfläche des Seitenwandelements, des Daches oder des Bodens aufnehmenden U-förmigen Rinne ergänzt sind.

Die spezifischen Konstruktionselemente sind den genannten Patentschriften zu entnehmen.

In einer bevorzugten Ausführungsform weisen die Kastenaufbauten keine Schweissverbindungen auf. Dadurch wird es beispielsweise möglich, die einzelnen Bauteile vor der Montage zu lackieren. Nach dem Zusammenbau der Profilstruktur und der Wandelemente sind in der Regel keine sogenannten Finisharbeiten mehr erforderlich.

Insbesondere im Bereich des Mannschaftsraumes können Fenster und Türen individuell in Abmessung und Einbauposition eingebaut werden.

Der Mannschaftsraum ist am rückwärtigen Ende des Kastenaufbaus angeordnet. Der jeweils verbleibende Raum im Kastenaufbau am frontseitigen Ende ist als Geräteraum vorgesehen. Erfinderisch ist die Anordnung des Mannschaftsraumes am rückwärtigen Ende des Kastenaufbaus und die Anordnung wenigstens einer Türe an der Rückwand. Dies ermöglicht das Verlassen des Mannschaftsraumes durch die rückwärtige Türe, wenn z.B. durch seitliche Behinderungen seitliche Türen nicht geöffnet werden können.

Eine vorteilhafte Ausführungsform vorliegender Erfindung liegt darin, auf dem Dach des Kastenaufbaus eine Dachnutzfläche vorzusehen. Eine Dachnutzfläche wird durch eine Dachpartie mit erhöhter Tragfähigkeit und z.B. mit Halterungen, wie Streben, Relings, Oesen und/oder Haken zur Befestigung der Dachlasten, geschaffen.

Die Dachnutzfläche kann sich über die ganze Länge und/oder die ganze Breite des Kastenaufbaus erstrecken.

Bei bekannten Anordnungen mit einem verlängerten Fahrerhaus und entsprechend verkürzten Geräteaufbauten, wäre eine derart grosse ununterbrochene Dachnutzfläche nicht machbar.

Die vorliegende Erfindung betrifft auch die Verwendung des Kastenaufbaus für gleichzeitigen Personen- und Gerätetransport im Rettungsdienst. Die Kastenaufbauten können auf Strassen- und Schienenfahrzeuge angebracht sein. Bevorzugt werden Strassenfahrzeuge und insbesondere Lastkraftwagen. Bevorzugt bei der Verwendung der Kastenaufbauten im Rettungsdienst ist die Verwendung bei der Feuerwehr, bei Wasserschutzdiensten oder Umweltschutzdiensten und bei diesen Diensten insbesondere auf Ersteinsatzfahrzeugen.

Beispielsweise wird es bei Notfalleinsätzen der Mannschaft ermöglicht, die Einsatzfahrt im Mannschaftsraum zu absolvieren und fallweise durch einen vorgesehenen Durchgang in den Innengang des Geräteraumes zu gelangen, um dort die Geräte für deren Verwendung am Einsatzort vorzubereiten.

## Patentansprüche

1. Fahrzeug und insbesondere Lastkraftwagen, welches ein Fahrerhaus und einen vom Fahrerhaus unabhängigen Kastenaufbau aufweist, wobei der Kastenaufbau wenigstens einen Raum zur Aufnahme von Personen und der Mittel zum Personentransport und wenigstens einen Raum zur Aufnahme von Geräten und/oder Frachtgut und der Mittel zum Gerätetransport aufweist,
dadurch gekennzeichnet,
dass der Raum (2) zur Aufnahme von Personen und der Mittel zum Personentransport am rückwärtigen Ende des Kastenaufbaues angeordnet ist und am rückwärtigen Ende des Kastenaufbaues wenigstens eine Türe an der Rückwand angeordnet ist.

2. Fahrzeug nach Anspruch 1, dadurch gekennzeichnet, dass der Kastenaufbau eine begehbare Innenverbindung zwischen dem Raum (2) zur Aufnahme der Personen und dem Raum (1) zur Aufnahme der Geräte und/oder des Frachtgutes aufweist.

3. Fahrzeug nach Anspruch 1, dadurch gekennzeichnet, dass innerhalb des Kastenaufbaus der Raum (1) zur Aufnahme der Geräte einen begehbaren Innengang (3) aufweist.

4. Fahrzeug nach den Ansprüchen 2 und 3, dadurch gekennzeichnet, dass die begehbare Innenverbindung (4) und der begehbare Innengang (3) in gegenseitiger Verbindung stehen.

5. Fahrzeug nach Anspruch 1, dadurch gekennzeichnet, dass der Kastenaufbau über dessen ganze Länge und Breite sich erstreckende Obergurtprofile (9) und Untergurtprofile (13) aufweist.

6. Fahrzeug nach Anspruch 5, dadurch gekennzeichnet, dass die Obergurtprofile (9) durchgehend einen gleichen Profilquerschnitt und die Untergurtprofile (13) durchgehend einen gleichen Profilquerschnitt aufweisen.

7. Fahrzeug nach Anspruch 1, dadurch gekennzeichnet, dass der Kastenaufbau Obergurtprofile (9), Untergurtprofile (13) und Eckprofile aufweist, wobei die Eckprofile den gleichen Profilquerschnitt aufweisen, wie die Obergurtprofile und/oder Untergurtprofile.

8. Fahrzeug nach Anspruch 1, dadurch gekennzeichnet, dass der Kastenaufbau Obergurtprofile (9) und Untergurtprofile (13) durchgehend gleichen Profilquerschnitt aufweisen und im Bereich des Raumes zur Aufnahme der Geräte zwischen Ober- und Untergurtprofile eine Gerippestruktur (15) und im Bereich des Raumes zur Aufnahme der Personen eine Wandstruktur (11) angeordnet ist und ein Adaptersystem (9,10;12,13;17,18;19,20) die Verbindung zwischen Gerippe- und Wandstruktur schafft.

9. Fahrzeug nach Anspruch 8, dadurch gekennzeichnet, dass das Adaptersystem (9,10;12,13;17,18;19,20) Profile umfasst, welche zur Aufnahme einer Wandstruktur (11) einen L-förmigen Querschnitt in der Profilgestaltung aufweisen und zur Aufnahme einer Gerippestruktur (15) die Profile (14,16,19,22) einen U-förmigen Quersschnitt in der Profilgestaltung, wobei innen an jedem der beiden Schenkel des U-Profils jeweils eine Auskragung angebracht ist, aufweisen.

10. Fahrzeug nach Anspruch 9 dadurch gekennzeichnet, dass die Wandstrukturen (11) vom Profilteil (9,13,17,19) L-förmigen Querschnittes aufgenommen und durch ein Adapterprofil (10,12,18,20) das derart an den Profilteil angelegt wird, dass sich ein im Querschnitt U-förmiger Profilteil ergibt, haltbar befestigt sind.

11. Verwendung des Kastenaufbaus nach Anspruch 1, für gleichzeitige Personen- und Gerätetransporte im Rettungsdienst.

12. Verwendung des Kastenaufbaus nach Anspruch 1, für Fahrzeuge der Feuerwehr.

## Claims

1. Vehicle and in particular lorry, comprising a driver's cab and a box body independent of the driver's cab, the box body comprising at least one space for accommodating passengers and the means for carrying passengers and at least one space for accommodating equipment and/or freight and the means for carrying equipment, characterised in that the space (2) for accommodating passengers and the means for carrying passengers is arranged at the rear end of the box body and at least one door is arranged on the rear wall at the rear end of the box body.

2. Vehicle according to claim 1, characterised in that the box body has a passable internal link between the space (2) for accommodating passengers and the space (1) for accommodating equipment and/or freight.

3. Vehicle according to claim 1, characterised in that the space (1) for accommodating equipment has a passable internal passage (3) within the box body.

4. Vehicle according to claims 2 and 3, characterised in that the passable internal link (4) and the passable internal passage (3) are interconnected.

5. Vehicle according to claim 1, characterised in that the box body has top boom profiles (9) and bottom boom profiles (13) extending over its entire length and width.

6. Vehicle according to claim 5, characterised in that the top boom profiles (9) have an identical cross section throughout and the bottom boom profiles (13) have an identical cross section throughout.

7. Vehicle according to claim 1, characterised in that the box body has top boom profiles (9), bottom boom profiles (13) and corner profiles, the corner profiles having the same cross section as the top boom profiles and/or bottom boom profiles.

8. Vehicle according to claim 1, characterised in that the box body has top boom profiles (9) and bottom boom profiles (13) with an identical cross section throughout and a framework structure (15) is arranged between the top and bottom boom profiles in the region of the space for accommodating equipment and a wall structure (11) is arranged in the region of the space for accommodating passengers and an adapter system (9, 10; 12, 13; 17, 18; 19, 20) provides for the connection between the framework structure and the wall structure.

9. Vehicle according to claim 8, characterized in that the adapter system (9, 10; 12, 13; 17, 18; 19, 20) includes profiles having an L-shaped cross section for receiving a wall structure (11) and the profiles (14, 16, 19, 22) have a U-shaped cross section for receiving a framework structure (15), a projection being applied to the interior of each of the two arms of the U-shaped profile.

10. Vehicle according to claim 9, characterized in that the wall structures (11) are received by the profiled part (9, 13, 17, 19) with an L-shaped cross section and are firmly secured by means of an adapter profile (10, 12, 18, 20) applied to the profiled part in such a manner that a profiled part with a U-shaped cross section is produced.

11. Use of the box body according to claim 1 for the simultaneous carrying of passengers and equipment in the emergency services.

12. Use of the box body according to claim 1 for fire service vehicles.

## Revendications

1. Véhicule, et en particulier camion, qui présente une cabine de conducteur et une superstructure en caisse indépendante de la cabine de conducteur, la superstructure en caisse présentant au moins un espace pour recevoir des personnes et des moyens destinés au transport des personnes et au moins un espace pour recevoir des appareils et/ou des marchandises et des moyens destinés au transport des appareils, caractérisé en ce que l'espace (2) pour recevoir les personnes et les moyens destinés au transport des personnes sont agencés à l'extrémité arrière de la superstructure en caisse et en ce qu'il est prévu à l'extrémité arrière de la superstructure en caisse au moins une porte dans la paroi arrière.

2. Véhicule selon la revendication 1, caractérisé en ce que la superstructure en caisse présente une liaison intérieure accessible entre l'espace (2) pour recevoir les personnes et l'espace (1) pour recevoir le matériel et/ou les marchandises.

3. Véhicule selon la revendication 1, caractérisé en ce que l'espace (1) pour recevoir le matériel présente un couloir intérieur accessible (3) à l'intérieur de la superstructure en caisse.

4. Véhicule selon l'une ou l'autre des revendications 2 et 3, caractérisé en ce que la liaison intérieure accessible (4) et le couloir intérieur accessible (3) sont en liaison mutuelle.

5. Véhicule selon la revendication 1, caractérisé en ce que la superstructure en caisse présente des profilés de membrure supérieure (9) et des profilés de membrure inférieure (13) qui s'étendent sur toute sa longueur et sur toute sa largeur.

6. Véhicule selon la revendication 5, caractérisé en ce que les profilés de membrure supérieure (9) présentent en continu la même section transversale profilée et en ce que les profilés de membrure inférieure (13) présentent en continu la même section transversale profilée.

7. Véhicule selon la revendication 1, caractérisé en ce que la superstructure en caisse présente des profilés de membrure supérieure (9), des profilés de membrure inférieure (13) et des profilés de coin, les profilés de coin présentant la même section transversale profilée que les profilés de membrure supérieure et/ou les profilés de membrure inférieure.

8. Véhicule selon la revendication 1, caractérisé en ce que la superstructure en caisse présente des profilés de membrure supérieure (9) et des profilés de membrure inférieure (13) d'une section transversale profilée égale en continu, et une ossature (15) dans la région de l'espace pour loger le matériel entre le profilé de membrure supérieure et inférieure, et en ce qu'il est prévu une structure de paroi (11) dans la région de l'espace pour recevoir les personnes, et un système adaptateur (9, 10 ; 12, 13 ; 17, 18 ; 19, 20) qui réalise la liaison entre l'ossature et la structure de paroi.

9. Véhicule selon la revendication 8, caractérisé en ce que le système adaptateur (9, 10 ; 12, 13 ; 17, 18 ; 19, 20) comporte des profilés qui présentent une section transversale en forme de L dans la configuration de profilés pour loger une structure de paroi (11), et en ce que les profilés (14, 16, 19, 22) présentent une section transversale en forme de U dans la configuration de profilés pour loger une ossature (15), un porte-à-faux étant prévu respectivement à l'intérieur sur chacun des deux bras du profilé en U.

10. Véhicule selon la revendication 9, caractérisé en ce que les structures de paroi (11) sont reçues par la partie profilée (9, 13, 17, 19) présentant la section transversale en forme de L, et en qu'elles sont fixées de manière à tenir par un profilé adaptateur (10, 12, 18, 20) qui est appliqué de telle manière contre la partie profilée qu'il en résulte une partie profilée d'une section transversale en forme de U.

11. Application de la superstructure en caisse selon la revendication 1, pour le transport simultané de personnes et de matériel pour les services de secours.

12. Application de la superstructure en caisse selon la revendication 1, pour les véhicules des sapeurs pompiers.
